(19) Europäisches Patentamt / European Patent Office / Office européen des brevets

(11) EP 1 792 933 B1

(12) EUROPEAN PATENT SPECIFICATION

(45) Date of publication and mention of the grant of the patent:
05.12.2012 Bulletin 2012/49

(51) Int Cl.:
B29K 105/00 (2006.01)     B29C 55/00 (2006.01)
C08J 5/18 (2006.01)       B29C 55/02 (2006.01)
B32B 27/34 (2006.01)      C08L 77/06 (2006.01)
C08L 23/26 (2006.01)      B32B 27/32 (2006.01)

(21) Application number: 05780488.2

(22) Date of filing: 16.08.2005

(86) International application number:
PCT/JP2005/014942

(87) International publication number:
WO 2006/019092 (23.02.2006 Gazette 2006/08)

(54) **STRETCHED POLYAMIDE FILM**

GESTRECKTE POLYAMIDFOLIE

FILM POLYAMIDE ÉTIRÉ

(84) Designated Contracting States:
DE FI FR GB IT

(30) Priority: 17.08.2004 JP 2004237527

(43) Date of publication of application:
06.06.2007 Bulletin 2007/23

(73) Proprietor: MITSUBISHI GAS CHEMICAL COMPANY, INC.
Chiyoda-ku,
Tokyo 100-8324 (JP)

(72) Inventor: NANBA, Hiroyuki,
Mitsubishi Gas Chemical Comp. Inc
Hiratsuka-shi, Kanagawa (JP)

(74) Representative: Gille Hrabal
Patentanwälte
Brucknerstrasse 20
40593 Düsseldorf (DE)

(56) References cited:
EP-A- 0 967 073        EP-A- 1 714 781
JP-A- 1 006 056        JP-A- 1 141 737
JP-A- 4 059 244        JP-A- 4 342 735
JP-A- 5 064 868        JP-A- 5 193 081
JP-A- 7 117 198        JP-A- 7 276 591
JP-A- 8 118 569        JP-A- 10 195 211
JP-A- 2002 226 612     US-A- 5 177 144

• TSUGIO NAGASAWA, YUKINOBU MURATA, KENJI TSUNASHIMA, YASUYUKI MORISHIMA, SHINICHI YANO, NAOKAZU KOIZUMI: "Amorphous Ferroelectric Polyamide Blends" MACROMOLECULES, [Online] vol. 33, no. 7, 9 March 2000 (2000-03-09), pages 2302-2304, XP002499117 Retrieved from the Internet: URL: http://pubs.acs.org/cgi-bin/article.cg i/mamobx/ 2000/33/i07/pdf/ma9917951.pdf> [retrieved on 2008-10-10]

**Description**

TECHNICAL FIELD

The present invention relates to gas-barrier stretched films.

BACKGROUND ART

Multi-layer films having a gas-barrier layer made of a gas-barrier resin such as polyvinylidene chloride (PVDC), ethylene-vinyl alcohol copolymer (EVOH) and polyamides have been used as gas-barrier packaging materials. Among polyamides, a polyamide having m-xylylene skeleton such as poly(m-xylylene adipamide) (hereinafter referred to as "nylon MXD6) which is produced by the polycondensation of m-xylylenediamine and adipic acid is, as compared with other gas-barrier resins, characterized by the little decrease in gas-barrier properties and the quick recovery of gas-barrier properties upon boiling treatment and retort treatment. With such characteristics, nylon MXD6 is recently widely applied to the fields of packaging. For example, a biaxially stretched, laminated film having a layer made of a mixture of an aromatic polyamide such as nylon MXD6 and a polyolefin which is graft-modified with an unsaturated carboxylic acid has been proposed as a packaging film (Patent Document 1).
Document JP 8 118 569 A discloses a polyamide multilayer oriented film comprising a resin layer (X) containing polyamide (A) having xylenediamine 4-12 C aliphatic dicarboxylic acid. Said stretched film is produced by melt mixing 70% of poly-meta-xylylene adipamide (MXD6) and 30 % of an amorphous polyamide resin (XE-3038). The stretched ratio is disclosed in the range of 2 to 5 preferably 2.5-4.5 and more preferably 3 to 4.
Patent Document 1: Japanese Patent 3021854

DISCLOSURE OF INVENTION

Films made of nylon MXD6 have good gas-barrier properties, but have a low impact resistance and flexibility when not stretched. In addition, whitening occurs upon the absorption of moisture and heating. It has been known that the impact resistance and flexibility are improved in some extents by stretching, and also known that the whitening is avoided by stretching. However, the film is broken or the transparency and gas-barrier properties are deteriorated when the stretch ratio exceeds 4 times in at least one direction of MD and TD. Thus, it has been difficult to produce a film having good gas-barrier properties and transparency.
As for polypropylene, films stretched in both directions of MD and TD by 5 to 10 times have been produced. To enhance the gas-barrier properties of polypropylene, the lamination with various gas-barrier resins has been studied. In the lamination with nylon MXD6, however, a laminated polypropylene film having good gas-barrier properties and transparency is difficult to produce, because the nylon MXD6 film is broken or the transparency and gas-barrier properties thereof are deteriorated when stretched under stretching conditions and stretch ratio which are employed for polypropylene.
An object of the present invention is to provide polyamide films having good gas-barrier properties and transparency.
The inventors have studied films made of a mixture of a polyamide having m-xylylene skeleton and other resins on their possible stretch ratio and the properties of stretched films. As a result, it has been found that films made of a mixture of a polyamide having m-xylylene skeleton with an amorphous polyamide resin and/or an ionomer resin are not broken even when stretched in a high stretch ratio which cannot be applied to nylon MXD6 films, to provide stretched films having transparency and gas-barrier properties sufficient for practical use. The present invention is based on this finding.
Thus, the present invention relates to a stretched film which is produced by melt-mixing a polyamide resin X with an amorphous polyamide resin Y in a weight ratio X/Y of 70/30 to 95/5, the polyamide resin X comprising a diamine constitutional unit containing 70 mol % or more of m-xylylene diamine unit and a dicarboxylic acid constitutional unit containing 70 mol % or more of $C_6$-$C_{12}$ $\alpha,\omega$-aliphatic dicarboxylic acid unit; extruding the mixture into a form of film; and stretching the film in a stretch ratio from 5.1 to 9 times in at least one direction of MD and TD.

BEST MODE FOR CARRYING OUT THE INVENTION

The polyamide resin X used in the present invention is produced by the polycondensation of a diamine component and a dicarboxylic acid component and includes a diamine constitutional unit containing 70 mol % or more, preferably 80 mol % or more and more preferably 90mol % or more (each inclusive of 100 mol %) of m-xylylene diamine unit and a dicarboxylic acid constitutional unit containing 70 mol % or more, preferably 80 mol % or more and more preferably 90 mol % or more (each inclusive of 100 mol %) of $C_6$-$C_{12}$ $\alpha,\omega$-aliphatic dicarboxylic acid unit.
The diamine constitutional unit may contain a diamine unit other than m-xylylene diamine unit in an amount of 30 mol % or less, preferably 20 mol % or less, and more preferably 10 mol % or less (each inclusive of zero). Examples of the diamine unit other than m-xylylene diamine unit include, but not limited to, diamine units derived from aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis (4-aminocyclohexyl)propane, bis(aminomethyl)decaline, and bis(aminomethyl)tricyclodecane; and aromatic ring-containing diamines such as bis(4-aminophenyl) ether, p-phenylenediamine, p-xylylenediamine, and bis(aminomethyl)naphthalene.

Examples of $C_6$-$C_{12}$ $\alpha,\omega$-aliphatic dicarboxylic acid include adipic acid, pimelic acid, suberic acid, azelaic acid, sebacic acid, undecanedioic acid and dodecanedioic acid, with adipic acid being particularly preferred. The dicarboxylic acid constitutional unit may include a unit derived from a dicarboxylic acid other than the $\alpha,\omega$-aliphatic dicarboxylic acid in an amount of 30 mol % or less, preferably 20 mol % or less, and more preferably 10 mol % or less (each inclusive of zero). Examples of the dicarboxylic acid other than the $\alpha,\omega$-aliphatic dicarboxylic acid may include, but not limited to, terephthalic acid, isophthalic acid and 2,6-naphthalenedicarboxylic acid.

The relative viscosity of the polyamide resin X is preferably from 2.3 to 4.2. The relative viscosity is represented by the following formula:

$$\text{Relative Viscosity} = t/t_0$$

wherein t is a falling time of a solution of one gram of the resin in 100 ml of a 96% sulfuric acid measured at 25°C using Cannon-Fenske viscometer, and to is a falling time of the 96% sulfuric acid measured in the same manner. When the relative viscosity is within the above range, the occurrence of draw down and the formation of fisheyes due to gelation, etc. can be prevented.

The polyamide resin X may contain a small amount of a unit derived from a monoamine or a monocarboxylic acid which is used as a molecular weight regulator in the production thereof.

The amorphous polyamide resin Y used in the present invention includes a constitutional unit preferably derived from an aromatic dicarboxylic acid, more preferably derived from terephthalic acid and/or isophthalic acid. The diamine constitutional unit is not limited as long as the polyamide resin X is amorphous and, for example, may include a unit derived from hexamethylenediamine. Examples of the amorphous polyamide resin Y include hexamethylenediamine-isophthalic acid-terephthalic acid copolyamides such as nylon 6I, nylon 6T, nylon 6IT, and nylon 6I6T (wherein I is isophthalic acid and T is terephthalic acid), with nylon 6IT being preferred.

The amorphous polyamide resin Y preferably shows no definite melting point in a differential thermal analysis and has a glass transition point of from 50 to 160 °C. The melt flow rate (MFR) of the amorphous polyamide resin Y is preferably from 1 to 30 g/min when measured at 230 °C under a load of 2160 g (ASTM D1238).

Comparative examples with a ionomer resin include ethylene-acrylic acid copolymer, ethylene-methacrylic acid copolymer and ethylene-methacrylic acid-acrylic acid copolymer, the pendant carboxyl groups of each copolymer being partially neutralized by metal ions. The content of the acrylic acid unit and/or the methacrylic acid unit in each copolymer is preferably from 10 to 20% by weight and more preferably from 12 to 18% by weight on the basis of the total weight of the ethylene unit, acrylic acid unit and methacrylic acid unit. If being 10% by weight or more, the ionomer resin is well dispersed in the polyamide resin X to increase the transparency of the resultant film. If being 20% by weight or less, the film can be stretched in a higher ratio without breaking and the production cost of the ionomer resin is low.

Examples of the cation for neutralizing carboxyl groups include, but not limited to, ions of metals such as zinc, sodium, lithium, potassium, magnesium, and calcium, with zinc ion and sodium ion being preferred.

The polyamide resin X is mixed with amorphous polyamide resin Y.

The effect of the present invention is obtained when amorphous polyamide resin Y is mixed with the polyamide resin X. When the amorphous polyamide resin Y is mixed with the polyamide resin X, the weight ratio of the polyamide resin X and the amorphous polyamide resin Y, X/Y, is preferably from 70/30 to 95/5 and more preferably from 80/20 to 90/10. If the amount of the polyamide resin X is within the above range, the film can be stretched in a high stretch ratio without breaking. If the amount of the amorphous polyamide resin Y is within the above range, the decrease of gas-barrier properties and the deterioration of transparency can be prevented.

The mixture of the polyamide resin X with the amorous polyamide resin Y is prepared by dry-blending the pellets of the resins. Alternatively, the mixture is prepared by melt-kneading the resins in an extruder and then pelletizing.

The mixture of the polyamide resin X with the amorphous polyamide resin Y may contain, if needed, an aliphatic polyamide to improve the flexibility and impact resistance. Examples of the aliphatic polyamide include nylon 6, nylon 66, and nylon 6-66. The mixture may further contain, if necessary, an antistatic agent, a lubricant, an antiblocking agent, a stabilizer, a dye and a pigment. The optional resin and additives are mixed by a dry blending or a melt kneading in a single or twin screw extruder.

The stretched film of the present invention is produced by melt-kneading the polyamide resin X with the amorphous polyamide resin Y extruding the resin mixture in the form of film, and then stretching the film in at least one direction of MD and TD in a stretch ratio from 5.1 to 9 times. The thickness of the stretched film is preferably from 5 to 40 $\mu$m. If being 5 $\mu$m or more, the stretching can be effected without breaking and the deterioration of transparency can be prevented. If being 40 $\mu$m or less, the film is stretched uniformly and the uneven thickness can be avoided.

The stretched film of the present invention is produced by stretching a raw film which is obtained by a film-forming method such as a T-die method and a cylindrical die method (inflation method). The raw film is preferably produced by melt-extruding the resin mixture preferably at 250 to 290 °C and more preferably at 250 to 270°C. If the extrusion temperature is high, the decomposition, gelation, discoloration and foaming occur. The stretching may be conducted by a simultaneous biaxial stretching or a successive biaxial stretching. The stretching temperature is preferably from 90 to 160 °C and more preferably from 110 to 150 °C. Within the above range, the defective stretching and whitening can be prevented.

When a film made of only nylon MXD6 is stretched in a ratio of 4 times or more in at least one direction of MD and TD, the film is broken and the transparency and gas-barrier properties are deteriorated. However, the stretching in a ratio exceeding 4 times can be successfully performed if the amorphous polyamide resin Y is added to the polyamide resin X. The stretch ratio in the direction of MD and/or TD is from 5.1 to 9 times.

The stretched film of the present invention made of the resin mixture of the polyamide resin X with the amorphous polyamide resin Y may be made into a multi-layer film by combining a film made of another thermoplastic resin. For example, a multi-layer film improved in the impact resistance and flexibility is obtained by combining an aliphatic polyamide film.

The multi-layer film is produce, for example, by laminating the stretched film of the present invention with a thermoplastic resin film. The films may be laminated by an adhesive. The thermoplastic resin films may be laminated on both surfaces of the stretched film. Examples of the thermoplastic resin include low-density polyethylene, high-density polyethylene, linear low-density polyethylene, polypropylene, polybutene, olefin copolymers, ionomer resins, ethylene-acrylic acid copolymer, ethylene-vinyl acetate copolymer, and modified polyolefin resin. These thermoplastic resins may be used alone or in combination. The thermoplastic resin film may be single-layered or multi-layered, and may be stretched or non-stretched. Examples of the adhesive include a graft-modified product which is prepared by modifying a polymer such as ethylene-vinyl acetate copolymer, high-density polyethylene, low-density polyethylene, linear low-density polyethylene, and polypropylene with maleic anhydride. A composition mainly composed of such graft-modified product is also usable as the adhesive.

Alternatively, a stretched multi-layer film is produced by separately melt-extruding the resin mixture of the polyamide resin X with the amorphous polyamide resin Y, an adhesive resin and the thermoplastic resin into a multi-layer film, and then stretching the multi-layer film in a ratio from 5.1 to 9 times in the direction of MD and/or TD. Like the production of the stretched single-layer film mentioned above, the stretched multi-layer film is produced by stretching a raw film which is obtained by a film-forming method such as a co-extrusion T-die method and a co-extrusion cylindrical die method (inflation method). The stretching may be conducted by a simultaneous biaxial stretching or a successive biaxial stretching. The same stretching conditions (stretching temperature, stretch ratio, etc.) as in the production of the stretched single-layer film mentioned above are applicable to the production of the stretched multi-layer film.

Examples of the thermoplastic resin used in the production of the stretched multi-layer film include low-density polyethylene, high-density polyethylene, linear low-density polyethylene, polypropylene, polybutene, olefin copolymers, ionomer resins, ethylene-acrylic acid copolymer, ethylene-vinyl acetate copolymer, and modified polyolefin resin. These thermoplastic resins may be used alone or in combination.

Examples of the adhesive resin include a graft-modified product which is prepared by modifying a polymer such as ethylene-vinyl acetate copolymer, high-density polyethylene, low-density polyethylene, linear low-density polyethylene, and polypropylene with maleic anhydride. A composition mainly composed of such graft-modified product is also usable as the adhesive resin.

In the laminate film or stretched multi-layer film of the present invention, the layer made of the mixture of the polyamide resin X with the amorphous polyamide resin Y acts as gas-barrier layer. The layered structure of the laminate film or stretched multi-layer film of the present invention generally includes a three-kind/three-layer structure such as A/B/C and a three-kind/five-layer structure such as C/B/A/B/C and further includes a layered structure of A/B/A/B/C, wherein A is the gas-barrier layer, B is the adhesive layer, and C is the thermoplastic resin layer. In a preferred embodiment, the thickness of the layer A is from 2 to 50 $\mu$m, the thickness of the layer B is from 2 to 20 $\mu$m, the thickness of the layer C is from 10 to 100 $\mu$m, and the total thickness of each of the laminate film and multi-layer stretched film is from 30 to 200 $\mu$m.

The stretched film, laminate film and multi-layer stretched film of the present invention exhibit a little decrease in the gas-barrier properties and a quick recovery of the gas-barrier properties even when being subjected to boiling treatment or retort treatment, and therefore, are suitable as packaging materials for foods such as processed meat foods, boiled foods and retorted foods and packaging materials for other products.

The opening of packaging material may be heat-sealed, tied by a ligature such as clip, and bound by other means. A tubular film is cut into a desired length and one of the open ends is heat-sealed or ligated for use, if necessary.

EXAMPLES

The present invention will be described in more detail with reference to the following examples. However, it should be noted that the following examples are merely illustrative and the scope of the present invention is not limited thereto.

The properties of the stretched films were measured by the following methods.

(1) Haze

Measured according to ASTM D1003 using a color deference/turbidity meter "Model COH-300A" manufactured by Nippon Denshoku Industries Co., Ltd.

(2) Oxygen permeability

Measure according to ASTM D3985 under the conditions of 23 °C and 60% relative humidity using an oxygen permeation instrument "OX-TRAN Model 10/50A" manufacture by Modern Controls, Inc.

EXAMPLE 1

A resin mixture was prepared by dry-blending 80 parts by weight of nylon MXD6 ("MX nylon 6007," tradename, manufactured by Mitsubishi Gas Chemical Company, Inc.) and 20 parts by weight of an amorphous polyamide resin ("Selar PA 3426," tradename, manufactured by Du Pont-Mitsui Polychemicals Co., Ltd.). The resin mixture was extruded from an extruder having a 20-mm diameter cylinder (Labo Plastomil manufactured by Toyo Seiki Seisaku-Sho, Ltd.) at 260 to 270 °C, and made into a raw film by a T-die-cooling roll method. To compare films stretched by different ratios, several raw films having different thicknesses were produced so that these films had the same thickness after stretching. The raw films were stretched by a biaxial stretching machine (tenter method) manufactured by Toyo Seiki Seisaku-Sho, Ltd. at 130 °C in the machine direction in a ratio of 4 to 6 times to obtain stretched films. The transparency (haze) and oxygen permeability of the stretched films are shown in Table 1.

EXAMPLE 2

A resin mixture for gas-barrier layer was prepared by dry-blending 20 parts by weight of nylon MXD6 ("MX nylon 6007," tradename, manufactured by Mitsubishi Gas Chemical Company, Inc.) and 20 parts by weight of an amorphous polyamide resin ("Selar PA 3426," tradename, manufactured by Du Pont-Mitsui Polychemicals Co., Ltd.). Polypropylene (layer C, "Novatec PP FL6CK," tradename, manufactured by Japan Polypropylene Corporation) was extruded at 200 to 210 °C from an extruder having a 45-mm diameter cylinder, while extruding an adhesive resin (layer B, "Modic P513V," tradename, manufacture by Mitsubishi Chemical Corporation) at 190 to 200 °C from an extruder having a 40-mm diameter cylinder and extruding the resin mixture for gas-barrier layer (layer A) at 260 to 270 °C from an extruder having a 30-mm diameter cylinder. The extruded resins were allowed to pass through a feed block and made into a molten multi-layer body (layer C/layer B/layer A). The molten multi-layer body was made into multi-layer films by a T-die-cooling roll method. To compare films stretched by different ratios, several raw multi-layer films having different thicknesses were produced so that these films had the same thickness after stretching. The multi-layer films were monoaxially stretched by a roll monoaxial stretching machine at 150°C in the machine direction in a ratio of 4 to 8 times to obtain stretched multi-layer films. The thickness of each layer, transparency (haze) and oxygen permeability of the stretched multi-layer films are shown in Table 3.

COMPARATIVE EXAMPLE 1

Stretched films were produced in the same manner as in Example 1 except for using only nylon MXD6 ("MX nylon 6007," tradename, manufactured by Mitsubishi Gas Chemical Company, Inc.). The transparency (haze) and oxygen permeability of the stretched films are shown in Tables 1 and 2.

COMPARATIVE EXAMPLE 2

Stretched multi-layer films were produced in the same manner as in Example 1 except for using only nylon MXD6 ("MX nylon 6007," tradename, manufactured by Mitsubishi Gas Chemical Company, Inc.) as the resin for gas-barrier layer. The thickness of each layer, transparency (haze) and oxygen permeability of the stretched multi-layer films are shown in Table 3.

Table 1 (stretched single-layer film)

|  | Example 1 | | | Comparative Example 1 | |
| --- | --- | --- | --- | --- | --- |
| Resin mixture (weight ratio) | | | | | |
| MX nylon 6007 | 80 | 80 | 80 | 100 | 100 |
| Selar PA3426 | 20 | 20 | 20 | 0 | 0 |
| Stretching temperature (°C) | 130 | 130 | 130 | 130 | 130 |
| MD stretch ratio (times) | 4.5 | 5 | 6 | 4.5 | 5 |
| Thickness of raw film ($\mu$m) | 69 | 84 | 85 | 70 | 95 |
| Break during stretching | none | none | none | none | occurred |
| Thickness of stretched film ($\mu$m) | 15 | 16 | 14 | 15 | - |
| Evaluation Results | | | | | |
| haze (%) | 2.5 | 3.0 | 3.5 | 15.0 | - |
| oxygen permeability (cc/m$^2$·day·atm) | 4.5 | 4.0 | 4.7 | 12.0 | - |

Table 3 (stretched multi-layer film)

|  | Example 2 | | | Comparative Example 2 | |
| --- | --- | --- | --- | --- | --- |
| Resin of gas-barrier layer (weight ratio) | | | | | |
| MX nylon 6007 | 80 | 80 | 80 | 100 | 100 |
| Selar PA3426 | 20 | 20 | 20 | 0 | 0 |
| Stretching temperature(°C) | 150 | 150 | 150 | 150 | 150 |
| MD stretch ratio (times) | 5 | 6 | 5 | 5 | 6 |
| Thickness of raw film ($\mu$m) | 345 | 415 | 550 | 370 | 420 |
| Break during stretching | none | none | none | none | occurred |
| Thickness of stretched film ($\mu$m) | | | | | |
| layer A (gas-barrier layer) | 14 | 13 | 16 | 13 | - |
| layer B (Tie*) | 5 | 5 | 4 | 5 | - |
| layer C (PP*) | 50 | 52 | 51 | 55 | - |
| total thickness | 69 | 70 | 71 | 73 | - |
| Evaluation Results | | | | | |
| haze (%) | 6.5 | 7.0 | 6.8 | 16.0 | - |
| oxygen permeability (cc/m2·day·atm) | 5.0 | 5.3 | 4.4 | 13.5 | - |

Tie*: adhesive resin (Modic P513V)
PP*: polypropylene (Novatec PP FL6CK)

INDUSTRIAL APPLICABILITY

In the present invention, an amorphous polyamide resin is added to a polyamide having m-xylylene skeleton. With such addition, films can be stretched in a high ratio without breaking to increase the productivity. The resultant stretched films are excellent in the transparency and gas-barrier properties, and the gas-barrier properties are little reduced and immediately recovered even when subjected to boiling treatment or retort treatment. Therefore, the stretched films are suitable as packaging materials for food, medicines, industrial chemicals, cosmetics, inks, and other products.

**Claims**

1. A stretched film which is produced by melt-mixing a polyamide resin X with an amorphous polyamide resin Y in a weight ratio, X/Y, of 70/30 to 95/5, the polyamide resin X comprising a diamine constitutional unit containing 70 mol % or more of m-xylylene diamine unit and a dicarboxylic acid constitutional unit containing 70 mol % or more of $C_6$-$C_{12}$ $\alpha$, $\omega$-aliphatic dicarboxylic acid unit; extruding the mixture into a form of film; and stretching the film in a stretch ratio from 5.1 to 9 times in at least one direction of MD and TD.

2. The stretched film according to claim 1, wherein the weight ratio, X/Y, is 80/20 to 90/10.

3. The stretched film according to any one of claims 1 or 2, wherein the amorphous polyamide resin Y is at least one hexamethylenediamine-isophthalic acid-terephthalic acid copolyamide selected from the group consisting of nylon 6I, nylon 6T, nylon 6IT, and nylon 6I6T wherein I represents isophthalic acid, and T represents terephthalic acid.

4. A laminate film comprising the stretched film as defined in any one of claims 1 to 3 and a thermoplastic resin film.

5. The laminate film according to claim 4, wherein the thermoplastic resin is at least one resin selected from the group consisting of low-density polyethylene, high-density polyethylene, linear low-density polyethylene, polypropylene, polybutene, olefin copolymers, ionomer resins, ethylene-acrylic acid copolymer, ethylene-vinyl acetate copolymer, and modified polyolefin resin.

6. A stretched multi-layer film produced by respectively melt-extruding a resin mixture, an adhesive resin and a thermoplastic resin to produce a multilayer film and stretching the multi-layer film in a stretch ratio from 5.1 to 9 times in at least one direction of MD and TD, wherein the resin mixture comprises a polyamide resin X and an amorphous polyamide resin Y in a weight ratio, X/Y, of 70/30 to 95/5, and wherein the polyamide resin X comprises a diamine constitutional unit containing 70 mol % or more of m-xylylene diamine unit and a dicarboxylic acid constitutional unit containing 70 mol % or more of $C_6$-$C_{12}$ $\alpha$, $\omega$-aliphatic dicarboxylic acid unit.

7. The stretched multi-layer film according to claim 6, wherein the weight ratio, X/Y, is 80/20 to 90/10.

**Patentansprüche**

1. Ein gestreckter Film, welcher durch Schmelzmischen eines Polyamid-Harzes X mit einem amorphen Polyamid-Harz Y in einem Gewichtsverhältnis X/Y von 70/30 bis 95/5, wobei das Polyamid-Harz X eine Diamin-Struktureinheit, welche 70 mol-% oder mehr einer m-Xylylendiamin-Einheit enthält, und eine Dicarbonsäure-Struktureinheit, welche 70 mol-% oder mehr einer $C_6$-$C_{12}$ $\alpha$,$\omega$-aliphatischen Dicarbonsäure-Einheit enthält, umfasst; Extrudieren der Mischung in die Form eines Films; und Strecken des Films in einem Streckverhöltnis von 5,1 bis 9 mal in mindestens eine von Laufrichtung (MD) und Querrichtung (TD) herstellt wird.

2. Der gestreckte Film nach Anspruch 1, worin das Gewichtsverhältnis X/Y von 80/20 bis 90/10 ist.

3. Der gestreckte Film nach einem der Ansprüche 1 oder 2, worin das amorphe Polyamid-Harz Y mindestens ein Hexamethylendiamin-Isophtalsäure-Terephtalsäure-Copolyamid ist, ausgewählt aus der Gruppe, bestehend aus Nylon 6I, Nylon 6T, Nylon 6IT und Nylon 6I6T, worin I Isophtalsäure und T Terephtalsäure darstellt.

4. Ein Laminatfilm, welcher den gestreckten Film nach einem der Ansprüche 1 bis 3 und einen thermoplastische Harzfilm umtasst.

5. Der Laminatfilm nach Anspruch 4, worin das thermoplastische Harz mindestens ein Harz, ausgewählt aus der Gruppe, bestehend aus Polyethylen niedriger Dichte, Polyethylen hoher Dichte, linearem Polyethylen niedriger Dichte, Polypropylen, Polybuten, Olefin-Copolymeren, Ionomerharzen, Ethylen-Acrylsäure-Copolymeren, Ethylen-Vinylacetat-Copolymer und modifiziertem Polyolefin-Harz, ist.

6. Ein gestreckter mehrschichtiger Film, welcher jeweils durch Schmelzextrudieren einer Harzmischung, eines klebenden Harzes und eines thermoplastischen Harzes, um einen mehrschichtigen Film herzustellen, und Strecken des mehrschichtigen Films in einem Streckverhältnis von 5,1 bis 9 mal in mindestens eine von Laufrichtung (MD) und Querrichtung (TD) hergestellt wird, worin die Harzmischung ein Polyamid-Harz X und ein amorphes Polyamid-Harz Y in einem Gewichtsverhältnis X/Y von 70/30 bis 95/5 umfasst, und worin das Polyamid-Harz X eine Diamin-Struktureinheit, welche 70 mol-% oder mehr einer m-Xylylendiamin-Einheit enthält, und eine Dicarbonsäure-Struktureinheit, welche 70 mol-% oder mehr einer $C_6$-$C_{12}$ $\alpha,\omega$-aliphatischen Dicarbonsäure-Einheit enthält, umfasst.

**7.** Der gestreckte mehrschichtige Film nach Anspruch 6, worin das Gewichtsverhältnis X/Y von 80/20 bis 90/10 ist.

## Revendications

**1.** Film étiré qui est produit par le mélange à l'état fondu d'une résine polyamide X avec une résine polyamide amorphe Y dans un rapport en poids, X/Y, de 70/30 à 95/5, la résine polyamide X comprenant une unité constitutionnelle de diamine contant 70 % en mole au plus d'une unité de m-xylylènediamine et une unité constitutionnelle d'un acide dicarboxylique contenant 70 % en mole au plus d'une unité d'un acide $\alpha,\beta$-dicarboxylique aliphatique en $C_6$-$C_{12}$ ; l'extrusion du mélange sous la forme d'un film ; et l'étirement du film selon un rapport d'étirement de 5,1 à 9 fois dans au moins une direction de la machine (MD) et transversale (TD).

**2.** Film étiré selon la revendication 1, dans lequel le rapport en poids, X/Y, est 80/20 à 90/10.

**3.** Film étiré selon l'une des revendications 1 ou 2, dans lequel la résine polyamide amorphe Y est au moins un copolyamide d'hexaméthylénediamine, d'acide isophtalique et d'acide téréphtalique sélectionne parmi le groupe consistant en du nylon 6I, du nylon 6T, du nylon 6IT et du nylon 6I6T, dans lesquelles I représente l'acide isophtalique et T représente l'acide téréphtalique.

**4.** Film stratifié comprenant le film étiré selon l'une des revendications 1 à 3 et un film d'une résine thermoplastique.

**5.** Film stratifié selon la revendication 4, dans lequel la résine thermoplastique est au moins une résine sélectionnée parmi le groupe consistant en du polyéthylène à basse densité, du polyéthylène à haute densité, du polyéthylène à basse densité linéaire, du polypropylène, du polybutyléne, des copolymères d'oléfîne, des résines ionomères, du copolymère d'éthylène et d'acide acrylique, du copolymère d'éthylène et d'acétate de vinyle et de la résine de polyoléfin modifiée.

**6.** Film étiré multicouche produit par, respectivement, l'extrusion à l'état fondu d'un mélange d'une résine, une résine adhésive et une résine thermoplastique pour produire une film moulticouche et l'étirement du film multicouche selon un rapport d'étirement de 5,1 à 9 fois dans au moins une direction de la machine (MD) et transversale (TD), dans lequel le mélange d'une résine comprend une résine polyamide X et une résine polyamide amorphe Y dans un rapport en poids, X/Y, de 70/30 à 95/5, et dans lequel la résine polyamide X comprenant une unité constitutionnelle de diamine contant 70 % en mole au plus d'une unité de m-xylylénediamine et une unité constitutionnelle d'un acide dicarboxylique contenant 70 % en mole au plus d'une unité d'un acide $\alpha,\beta$-dicarboxylique aliphatique en $C_6$-$C_{12}$.

**7.** Film étiré multicouche selon la revendication 6, dans lequel le rapport en poids, X/Y, est 80/20 à 90/10,

**EP 1 792 933 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8118569 A
- JP 3021854 B